# FASCICULE DE BREVET EUROPEEN

(11) **EP 1 421 866 B1**
(45) Date de publication et mention de la délivrance du brevet: **18.05.2005**
(21) Numéro de dépôt: 03025642.4
(22) Date de dépôt: 07.11.2003
(51) Int. Cl.: A43B 23/02, B29D 31/515, B29C 44/12

(54) **Procédé de fabrication d'une partie de chaussure de sport**
Verfahren zur Herstellung eines Teils eines Sportschuhes
Method for manufacturing a part of a sport shoe

(30) Priorité: 13.11.2002 FR 0214153
(43) Date de publication de la demande: 26.05.2004
(73) Titulaire: SKIS ROSSIGNOL S.A., 38500 Voiron (FR)
(72) Inventeur: Perotto, Riccardo, 31040 Venagazzu (IT)
(74) Mandataire: Meylan, Robert Maurice

(56) Documents cités:
- WO-A-90/03744
- FR-A- 1 426 842
- US-A- 3 130 505
- US-A- 3 583 081
- US-A- 5 089 191

## Description

La présente invention concerne un procédé de fabrication d'une partie de la tige de chaussure de sport en matériau composite à partir d'éléments plans. Elle concerne en outre une tige de chaussure réalisée par un tel procédé.

Dans le domaine des chaussures de sport, et en particulier dans celui des chaussures de ski, il est bien connu de réaliser des chaussures par injection de matière plastique dans un moule de manière à obtenir une coque de forme intérieure donnée et reproductible par moulage. Les procédés présentent tous comme inconvénient majeur, le fait que la coque de la chaussure ne puisse pas présenter, sur le dessus du pied et au niveau du bas de jambe, de rabats se recouvrant de manière à assurer une fermeture plus ou moins étanche de la chaussure.

On connaît du brevet FR 1 547 769 un procédé palliant cet inconvénient. Ce procédé consiste à réaliser une chaussure de ski par assemblage étanche de deux éléments obtenus séparément par moulage. Chaque élément peut ainsi présenter des formes s'étendant localement au-delà de son plan de liaison avec l'autre élément. Ces éléments peuvent être réalisés en caoutchouc ou en matériau synthétique.

On connaît, d'autre part, de la demande internationale de brevet WO 00/51458, un procédé de réalisation d'une tige de chaussure de patin à partir de plusieurs éléments en matériau composite assemblés. Ce procédé consiste, dans une première étape, à réaliser des éléments plats comprenant au moins deux couches de matériaux différents. Chaque élément plat est ensuite chauffé puis pressé entre deux matrices afin de lui donner sa forme définitive. Ces éléments sont finalement assemblés les uns aux autres.

Ces procédés permettent également d'obtenir une forme intérieure reproductible, mais ils présentent cependant un inconvénient. Après avoir réalisé les différents éléments, on doit encore lier à ceux-ci des éléments annexes tels que des passants pour des lacets destinés à assurer la fermeture et le serrage de la chaussure. Ces opérations sont rendues mal aisées par le fait que les éléments de chaussure ont déjà leur forme tridimensionnelle finale. En outre, dans le cas du dernier procédé cité la phase de chauffage interdit la liaison des éléments annexes avant la mise en forme et le thermoformage modifie l'état de la surface du matériau formant l'extérieur de la chaussure ce qui la plupart du temps ne permet pas d'obtenir l'état de surface désiré.

On connaît également du brevet FR 1 426 842, un procédé de fabrication de semelles de sandales.

Le but de l'invention est de fournir un procédé de réalisation d'une partie de la tige de chaussure apportant une solution au problème précité et améliorant les procédés de l'art antérieur. En particulier, l'invention propose un procédé de réalisation de tige de chaussure simplifiant l'ajout de motifs décoratifs et l'ajout d'éléments annexes sur ces éléments de la chaussure.

Le procédé de fabrication selon l'invention est caractérisé par la partie caractérisante de la revendication 1.

Différents modes d'exécution du procédé sont définis par les revendications dépendantes 2 à 19.

La revendication 20 définit une tige de chaussure de sport obtenue par le procédé précédent.

Un exemple de mise en oeuvre du procédé selon l'invention sera décrit en relation au dessin annexé, dans lequel :
La figure 1 est une vue en perspective d'une chaussure dont la tige a été réalisée selon l'invention.
La figure 2 est une vue de derrière d'une chaussure dont la tige a été réalisée selon l'invention.
La figure 3 est une vue de face d'un flan plat en matériau souple destiné à constituer la surface extérieure d'une partie de chaussure.
La figure 4 est une vue de face d'un flan plat en matériau souple destiné à constituer la surface intérieure d'une partie de chaussure.
La figure 5 est une vue en perspective d'une partie réalisée selon le procédé et destinée à être assemblée à une partie similaire et symétrique pour former une tige de chaussure.
La figure 6 est une vue de dessus de deux coquilles d'un moule permettant de réaliser la partie représentée à la figure 5.

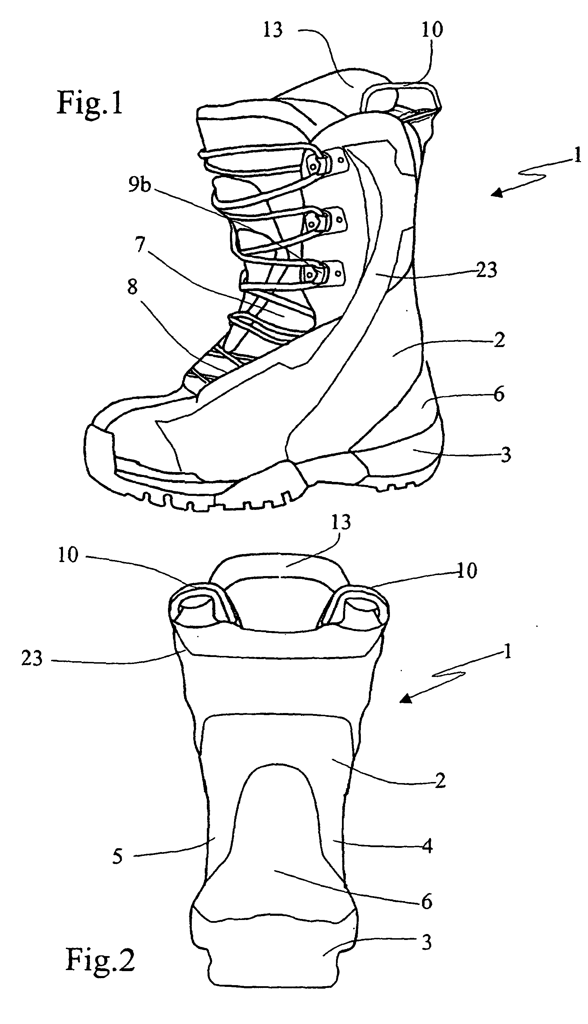

La chaussure 1 représentée aux figures 1 et 2 est destinée à la pratique du surf à neige. Elle est principalement composée d'une tige semi-rigide 2 et d'une semelle 3. La tige 2 est essentiellement réalisée à partir de deux demi-coquilles 4, 5 assemblées par couture et/ou par collage selon un plan médian séparant la tige en une partie 4 couvrant l'extérieur du pied de l'utilisateur et une partie 5 couvrant l'intérieur du pied de l'utilisateur. La tige 2 comprend en outre une partie rapportée 6 de forme sensiblement triangulaire formant le talon de la chaussure 1. La semelle 3, composée d'une partie interne et d'une partie externe liées l'une à l'autre, est assemblée avant d'être mise en place sur la tige 2 de la chaussure par des liaisons collées et/ou cousues. La chaussure 1 présente également une languette 7 liée à la tige en bas de son échancrure 8. La chaussure reçoit un chausson de confort 13.

La tige 2 de la chaussure comprend des passants 9a pour lacets, des anneaux de préhension 10, des doublures d'étanchéité 11 liées aux deux coquilles 4, 5 au niveau des passants 9 pour lacets, des rabats 12 permettant d'éviter l'action sur le chausson intérieur 13 des moyens de fixation des boucles de serrage et des décorations 23. Les deux demi-coquilles sont mises en forme après que ces différents éléments annexes ont été mis en place sur les différents éléments destinés à réaliser les demi-coquilles.

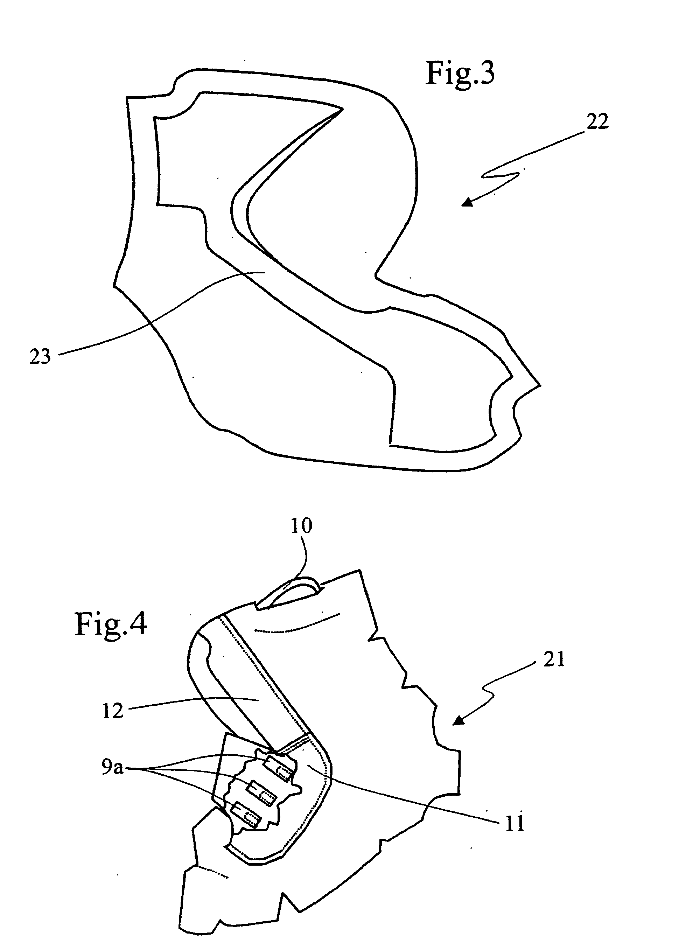

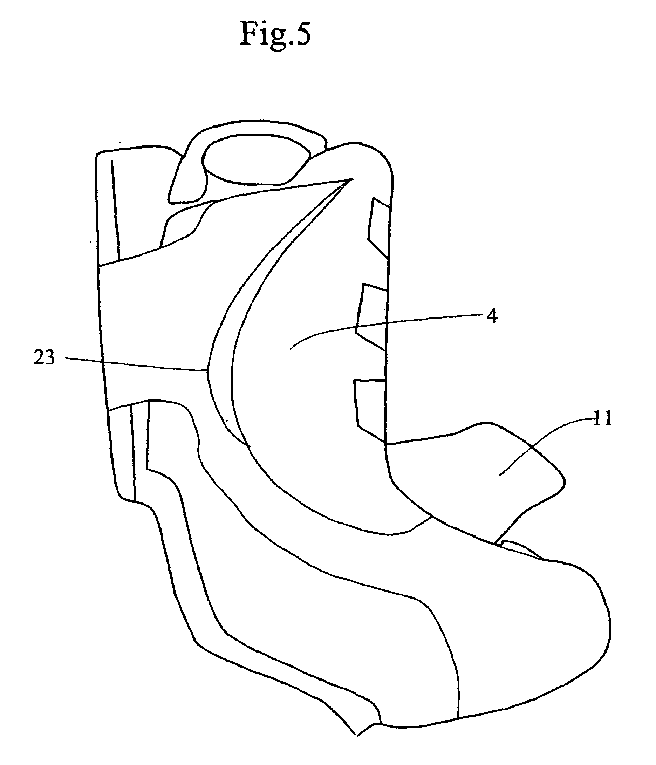

Ainsi, pour réaliser une demi-coquille 4 telle que représentée à la figure 5, on commence par découper deux flans de matériaux souples dits flan intérieur 21 et flan extérieur 22 représentés aux figures 3 et 4 et destinés à constituer respectivement les surfaces intérieure et extérieure de la demi-coquille 4.

Sur le flan extérieur 22, on applique, par un procédé de sérigraphie connu, une encre pour réaliser des motifs décoratifs 23 et imprimer ainsi des éléments tels que des marques de fabrique. Cet assemblage est réalisé à plat, le flan ne présentant pas encore sa forme finale.

Sur le flan intérieur 21, on assemble par couture un anneau de préhension 10, dans une zone destinée à être localisée une fois la chaussure terminée en haut de la partie supérieure de la tige 2. On assemble par couture des passants 9a pour lacets, une doublure d'étanchéité 11 liée au niveau des passants 9a et un rabat 12 au-dessus du cou-de-pied au niveau de l'échancrure de la tige. Tous ces assemblages sont réalisés à plat, le flan ne présentant pas encore sa forme finale. On peut également donner au flan une préforme par couture.

Le rabat 12 permet d'éviter une action d'usure du chausson de confort 13 engendrée par le contact de rivets de fixation de passants 9b réalisés en matériau plastique dur ou en métal ne pouvant pas être cousus sur la tige.

On confectionne ainsi quatre flans, deux pour constituer l'une des demi-coquilles de la tige et deux autres pour constituer l'autre demi-coquille de la tige.

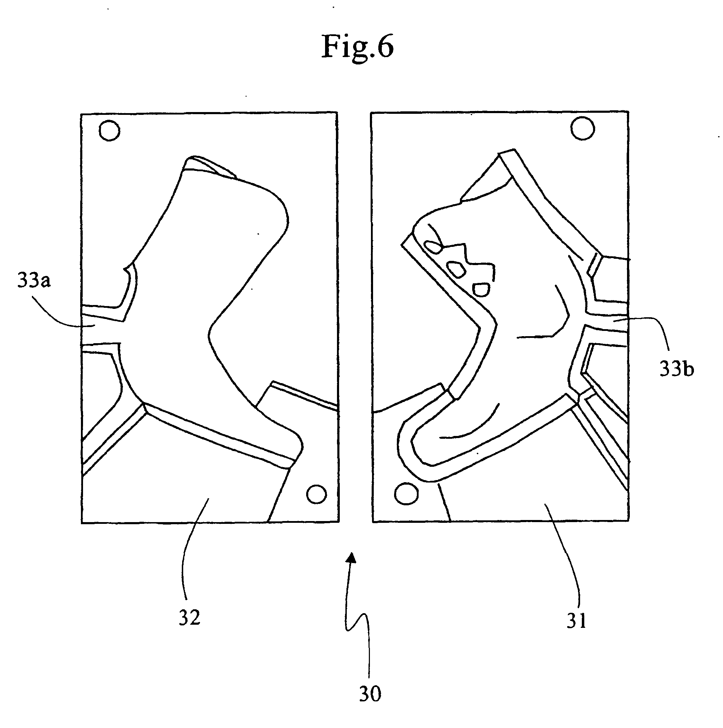

Pour réaliser une demi-coquille 4, on positionne les deux flans 21, 22 destinés à former cette demi-coquille, l'un sur l'autre, sur la première coquille 31 d'un moule 30 présentant l'empreinte en creux de la demi-coquille de tige. Ce moule est représenté à la figure 6. Pour leur positionnement, les flans 21 et 22 présentent plusieurs trous dans leurs bordures permettant de les lier à des axes solidaires du moule 30. On referme ensuite le moule par sa deuxième coquille 32 et on injecte entre les flans 21 et 22 par un orifice, formé par les canaux 33a et 33b, un matériau de liaison moussant, tel qu'une mousse de polyuréthane à deux composants et agent gonflant, puis on démoule après polymérisation de la mousse. La demi-coquille 4 obtenue est semi-rigide et ses surfaces externe et interne sont terminées. En particulier, la surface externe présente son décor et son aspect définitif.

On obtient ainsi une demi-coquille qu'il ne reste plus qu'à assembler, après détourage de celle-ci, à une autre demi-coquille 5 obtenue par le même procédé et à d'autres éléments tels que la semelle 3 et l'élément de tige 6 formant le talon par des procédés connus de collage, de soudure et/ou de couture.

La demi-coquille 4 obtenue après démoulage présente sa forme tridimensionnelle finale et est quasiment finie, elle présente en particulier l'avantage d'être déjà munie de passants 9a pour lacet, d'une doublure d'étanchéité 11 au niveau de ces passants, d'un rabat 12 de protection du chausson de confort, et de décorations 23 sur sa partie extérieure.

Pour le flan constituant la surface extérieure de la tige on utilisera de préférence un tissu synthétique élastique par exemple en polyamide, en polyester ou en lycra (marque déposée), normalement imperméabilisé au moyen d'un élastomère LES, PU ou PVC d'une épaisseur de l'ordre de 0,8 à 1 mm. Le film d'élastomère a également pour effet d'attacher le matériau de liaison moussant.

Pour le flan constituant la surface interne de la tige, on peut utiliser un tissu synthétique élastique tel que ceux cités pour réaliser la surface extérieure. On peut encore utiliser un matériau comprenant un feutre en polyester dont l'épaisseur est de l'ordre de 1 à 3 mm.

Les matériaux cités dans cette réalisation ne le sont qu'à titre d'exemples. En effet, on peut utiliser, pour réaliser les flans, tout matériau souple compatible avec les procédés de couture et de collage utilisés pour lier les différents éléments annexes. De même, on peut utiliser différents matériaux injectables suivant les propriétés mécaniques des demi-coquilles recherchées.

## Revendications

1. Procédé de fabrication d'une partie (4, 5) de la tige de chaussure de sport (1) en matériau composite à partir d'éléments plans (21, 22), **caractérisé** essentiellement par les étapes suivantes :
- on confectionne un premier flan (22) en un premier matériau souple destiné à constituer la face externe de ladite partie de chaussure et un second flan (21) en un second matériau souple destiné à constituer la face interne de ladite partie (4, 5) de chaussure,
- on dispose le premier et le second flan sur l'empreinte d'une première coquille (31) d'un moule (30), le premier flan (22) contre l'empreinte,
- on ferme le moule (30) par sa deuxième coquille (32),
- on injecte un matériau moussant de liaison entre les flans (21, 22),
- on démoule après polymérisation du matériau injecté de manière à obtenir la partie (4, 5) de la tige de chaussure.

2. Procédé selon la revendication 1, **caractérisé en ce que** le premier matériau comprend un tissu synthétique.

3. Procédé selon l'une des revendications 1 à 2, **caractérisé en ce que** le premier matériau comprend un tissu élastique.

4. Procédé selon l'une des revendications 1 à 3, **caractérisé en ce que** le premier matériau est imperméabilisé par un élastomère.

5. Procédé selon l'une des revendications 1 à 4, **caractérisé en ce que** le premier matériau a une épaisseur de 0,8 à 1 mm.

6. Procédé selon l'une des revendications 1 à 5, **caractérisé en ce que** le second matériau comprend un tissu synthétique.

7. Procédé selon l'une des revendications 1 à 6, **caractérisé en ce que** le second matériau comprend un tissu élastique.

8. Procédé selon l'une des revendications 1 à 7, **caractérisé en ce que** le second matériau comprend un feutre de polyester.

9. Procédé selon l'une des revendications 1 à 8, **caractérisé en ce que** le matériau injecté est une mousse de polyuréthane.

10. Procédé de fabrication d'une partie de chaussure de sport (1) selon l'une des revendications 1 à 9, **caractérisé en ce qu'**on rapporte au moins un élément (9a, 10, 11, 12, 23) sur au moins l'un des flans (21, 22) destiné à réaliser la face interne ou externe de la partie avant de placer celui-ci dans le moule d'injection (30).

11. Procédé selon la revendication 10, **caractérisé en ce qu'**un élément rapporté est un motif décoratif (23) appliqué par un procédé de sérigraphie.

12. Procédé selon la revendication 10, **caractérisé en ce qu'**un élément rapporté est un passant (9a) pour lacet.

13. Procédé selon la revendication 10, **caractérisé en ce qu'**un élément rapporté est un anneau (10) de préhension.

14. Procédé selon la revendication 10, **caractérisé en ce qu'**un élément rapporté est une doublure d'étanchéité (11).

15. Procédé selon la revendication 10, **caractérisé en ce qu'**un élément rapporté est une languette de protection (12).

16. Procédé selon la revendication 11, **caractérisé en ce qu'**un élément rapporté est un élément de renforcement.

17. Procédé selon la revendication 10, **caractérisé en ce qu'**un élément rapporté est un élément de confort présentant une densité différente de celle du matériau moussant injecté.

18. Procédé selon la revendication 10, **caractérisé en ce qu'**un élément rapporté est une poche destinée à recevoir un matériau de personnalisation injecté.

19. Procédé de fabrication d'une tige (2) de chaussure de sport (1), **caractérisé en ce qu'**on assemble des parties (4, 5) de tige réalisées selon l'une des revendications 1 à 18.

20. Tige (2) de chaussure de sport obtenue par le procédé selon la revendication 19.

## Patentansprüche

1. Verfahren zur Herstellung eines Teils (4, 5) des Schafts eines Sportschuhs (1) aus Verbundmaterial, ausgehend von ebenen Elementen (21, 22), **gekennzeichnet** im wesentlichen durch die folgenden Schritte:
- Man fertigt einen ersten Zuschnitt (22) aus einem ersten biegsamen Material, welcher dazu bestimmt ist, die Aussenseite des erwähnten Schuhteils zu bilden, und einen zweiten Zuschnitt (21) aus einem zweiten biegsamen Material an, welcher dazu bestimmt ist, die Innenseite des erwähnten Schuhteils (4, 5) zu bilden,
- man legt den ersten und den zweiten Zuschnitt auf die Prägung einer ersten Kokille (31) einer Spritzform (30), wobei der ersten Zuschnitt (22) an der Prägung anliegt,
- man schliesst die Spritzform (30) mit ihrer zweiten Kokille (32),
- man injiziert ein schäumendes Verbindungsmaterial zwischen die Zuschnitte (21, 22);
- nach der Polymerisation des verspritzen Materials entformt man dieses, um den Teil (4, 5) des Schafts des Schuhs zu erhalten.

2. Verfahren nach Anspruch 1, **dadurch gekennzeichnet, dass** das erste Material ein Chemiefasergewebe enthält.

3. Verfahren nach Anspruch 1 oder 2, **dadurch gekennzeichnet, dass** das erste Material ein elastisches Gewebe enthält.

4. Verfahren nach einem der Ansprüche 1 bis 3, **dadurch gekennzeichnet, dass** das erste Material durch ein Elastomer wasserdicht gemacht wird.

5. Verfahren nach einem der Ansprüche 1 bis 4, **dadurch gekennzeichnet, dass** das erste Material eine Dicke von 0,8 bis 1 mm hat

6. Verfahren nach einem der Ansprüche 1 bis 5, **dadurch gekennzeichnet, dass** das zweite Material ein Chemiefasergewebe enthält.

7. Verfahren nach einem der Ansprüche 1 bis 6, **dadurch gekennzeichnet, dass** das zweite Material ein elastisches Gewebe enthält.

8. Verfahren nach einem der Ansprüche 1 bis 7, **dadurch gekennzeichnet, dass** das zweite Material einen Polyester-Filz enthält.

9. Verfahren nach einem der Ansprüche 1 bis 8, **dadurch gekennzeichnet, dass** das verspritzte Material ein Polyurethan-Schaum ist.

10. Verfahren zur Herstellung eines Teils eines Sportschuhs (1) nach einem der Ansprüche 1 bis 9, **dadurch gekennzeichnet, dass** man wenigstens ein Element (9a, 10, 11, 12, 23) auf wenigstens einen der Zuschnitte (21, 22) aufbringt, der dazu bestimmt ist, die Innenseite oder die Aussenseite des Teils zu bilden, bevor dieser in die Spritzform (30) gelegt wird.

11. Verfahren nach Anspruch 10, **dadurch gekennzeichnet, dass** ein aufgebrachtes Element ein dekoratives Motiv (23) ist, welches durch ein Siebdruck-Verfahren aufgedruckt wird.

12. Verfahren nach Anspruch 10, **dadurch gekennzeichnet, dass** ein aufgebrachtes Element eine Schlaufe (9a) für ein Schuhband ist.

13. Verfahren nach Anspruch 10, **dadurch gekennzeichnet, dass** ein aufgebrachtes Element ein zum Greifen dienender Ring (10) ist.

14. Verfahren nach Anspruch 10, **dadurch gekennzeichnet, dass** ein aufgebrachtes Element eine Dichtheitsverkleidung (11) ist.

15. Verfahren nach Anspruch 10, **dadurch gekennzeichnet, dass** ein aufgebrachtes Element eine Schutzzunge (12) ist.

16. Verfahren nach Anspruch 11, **dadurch gekennzeichnet, dass** ein aufgebrachtes Element ein Verstärkungselement ist.

17. Verfahren nach Anspruch 10, **dadurch gekennzeichnet, dass** ein aufgebrachtes Element ein dem Komfort dienendes Element mit einer Dichte ist, die von der des verspritzten Schaumstoffmaterials verschieden ist.

18. Verfahren nach Anspruch 10, **dadurch gekennzeichnet, dass** ein aufgebrachtes Element eine Tasche ist, die dazu bestimmt ist, ein injiziertes Material mit persönlicher Note aufzunehmen.

19. Verfahren zur Herstellung eines Schafts (2) eines Sportschuhs (1), **dadurch gekennzeichnet, dass** man Teile (4, 5) des Schafts, die nach einem der Ansprüche 1 bis 18 hergestellt wurden, zusammensetzt.

20. Sportschuhschaft (2), der nach einem Verfahren gemäss Anspruch 19 erhalten wurde.

## Claims

1. A method for manufacturing a part (4, 5) of the upper of a sports boot (1) in composite material from flat elements (21, 22), **characterized** essentially by the following steps:
- preparing a first blank (22) in a first flexible material intended to form the external face of said boot part and a second blank (21) in a second flexible material intended to form the internal face of said boot part (4, 5),
- placing the first and second blanks on the impression of a first half (31) of a mold (30), with the first blank (22) against the impression,
- closing the mold (30) by using its second half (32),
- injecting a foamable binding material between the blanks (21, 22),
- mold release after polymerization of the injected material so as to obtain the part (4, 5) of the boot upper.

2. The method as claimed in claim 1, **characterized in that** the first material comprises a synthetic fabric.

3. The method as claimed in one of claims 1 to 2, **characterized in that** the first material comprises an elastic fabric.

4. The method as claimed in one of claims 1 to 3, **characterized in that** the first material is waterproofed by an elastomer.

5. The method as claimed in one of claims 1 to 4, **characterized in that** the first material has a thickness of from 0.8 to 1 mm.

6. The method as claimed in one of claims 1 to 5, **characterized in that** the second material comprises a synthetic fabric.

7. The method as claimed in one of claims 1 to 6, **characterized in that** the second material comprises an elastic fabric.

8. The method as claimed in one of claims 1 to 7, **characterized in that** the second material comprises a polyester felt.

9. The method as claimed in one of claims 1 to 8,
**characterized in that** the injected material is a polyurethane foam.

10. The method for manufacturing a part of a sports boot (1) as claimed in one of claims 1 to 9, **characterized in that** at least one element (9a, 10, 11, 12, 23) is affixed to at least one of the blanks (21, 22), which is intended to form the internal or external face of the part, before it is placed in the injection mold (30).

11. The method as claimed in claim 10, **characterized in that** the affixed part is a decorative pattern (23) applied by a screen printing method.

12. The method as claimed in claim 10, **characterized in that** the affixed element is an eyelet (9a) for a lace.

13. The method as claimed in claim 10, **characterized in that** the affixed element is a ring (10) for gripping.

14. The method as claimed in claim 10, **characterized in that** the affixed element is a watertight flap (11).

15. The method as claimed in claim 10, **characterized in that** the affixed element is a protecting tongue (12).

16. The method as claimed in claim 10, **characterized in that** the affixed element is a reinforcing element.

17. The method as claimed in claim 10, **characterized in that** the affixed element is a comfort element having a density different to that of the injected foamable material.

18. The method as claimed in claim 10, **characterized in that** the affixed element is a compartment intended to hold an injected personalization material.

19. A method for manufacturing an upper (2) of a sports boot (1), **characterized in that** parts (4, 5) of an upper which have been produced as claimed in one of claims 1 to 18.

20. An upper (2) of a sports boot obtained by the method as claimed in claim 19.
